# EUROPEAN PATENT APPLICATION

(11) **EP 4 645 938 A1**
(43) Date of publication of application: **05.11.2025**
(21) Application number: 24738665.9
(22) Date of filing: 02.01.2024
(51) Int. Cl.: H04W 24/02, H04W 48/16, H04W 48/18, H04L 41/0894, H04L 41/14

(54) **METHOD AND DEVICE FOR SUPPORTING TERMINAL POLICY-RELATED SLICE DATA COLLECTION AND ANALYSIS SERVICE**

(30) Priority: 03.01.2023 KR 20230000798
(71) Applicant: Samsung Electronics Co., Ltd., Suwon-si, Gyeonggi-do 16677 (KR)
(72) Inventor: KIM, Hyesung, Suwon-si Gyeonggi-do 16677 (KR); PARK, Jungshin, Suwon-si Gyeonggi-do 16677 (KR); SUH, Dongeun, Suwon-si Gyeonggi-do 16677 (KR)
(74) Representative: Nederlandsch Octrooibureau
(86) International application number: PCT/KR2024/000030
(87) International publication number: WO 2024/147594

(57) **Abstract**

The present disclosure relates to a 5G or 6G communication system for supporting a higher data transmission rate. A method performed by an NWDAF entity in a wireless communication system may comprise the steps of: receiving, from a PCF entity, an analysis request for a network slice, the analysis request comprising identification information of the network slice; receiving, from an OAM entity or an NSSF entity, on the basis of the identification information, first information comprising at least one of the number of terminals registered in the network slice or the number of PDU sessions generated in the network slice; receiving NSAC status information, from an NSACF entity, on the basis of the identification information, the NSAC status information comprising second information on at least one of the maximum number of terminals that can be registered in the network slice or the maximum number of PDU sessions that can be generated in the network slice, when NSAC is applied; and performing NSAC status analysis for the network slice on the basis of the first information and the second information.

## Description

### [Technical Field]

The disclosure relates to wireless communication systems and, more specifically, to a method and a device for supporting a terminal policy-related slice data collection and analysis service in a mobile communication system.

### [Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

Provided according to an embodiment of the disclosure is an apparatus and a method capable of effectively providing services in a mobile communication system.

### [Solution to Problem]

According to an embodiment, a method performed by a network data analytic function (NWDAF) entity in a wireless communication system may include receiving, from a policy control function (PCF) entity, an analysis request for a network slice, wherein the analysis request includes identification information of the network slice, receiving, from an operations administration and maintenance (OAM) entity or a network slice selection function (NSSF) entity, first information including at least one of the number of terminals registered in the network slice or the number of protocol data unit (PDU) sessions generated in the network slice based on the identification information, receiving, from a network slice admission control function (NSACF) entity, NSAC status information based on the identification information, wherein the NSAC status information includes second information on at least one of the maximum number of terminals that can be registered in the network slice or the maximum number of PDU sessions that can be generated in the network slice in case that NSAC is applied, and performing NSAC status analysis for the network slice, based on the first information and the second information.

According to an embodiment, a network data analytic function (NWDAF) entity in a wireless communication system may include a transceiver, and a controller coupled with the transceiver, wherein the controller is configured to receive, from a policy control function (PCF) entity, an analysis request for a network slice, wherein the analysis request includes identification information of the network slice, receive, from an operations administration and maintenance (OAM) entity or a network slice selection function (NSSF) entity, first information including at least one of the number of terminals registered in the network slice or the number of protocol data unit (PDU) sessions generated in the network slice based on the identification information, receive, from a network slice admission control function (NSACF) entity, NSAC status information based on the identification information, wherein the NSAC status information includes second information on at least one of the maximum number of terminals that can be registered in the network slice or the maximum number of PDU sessions that can be generated in the network slice in case that NSAC is applied, and perform NSAC status analysis for the network slice, based on the first information and the second information.

According to an embodiment, a method performed by a network slice admission control function (NSACF) entity in a wireless communication system may include receiving, from a network data analytic function (NWDAF) entity, a request for network slice admission control (NSAC) status information, wherein the request includes identification information of a network slice, and transmitting the NSAC status information to the NWDAF entity, based on the identification information, wherein the NSAC status information includes at least one of the maximum number of terminals that can be registered in the network slice or the maximum number of PDU sessions that can be generated in the network slice in case that NSAC is applied, and wherein NSAC status analysis for the network slice is based on the NSAC status information.

According to an embodiment, a network slice admission control function (NSACF) entity in a wireless communication system may include a transceiver, and a controller coupled with the transceiver, wherein the controller is configured to receive, from a network data analytic function (NWDAF) entity, a request for network slice admission control (NSAC) status information, wherein the request includes identification information of a network slice, and transmit the NSAC status information to the NWDAF entity, based on the identification information, wherein the NSAC status information includes at least one of the maximum number of terminals that can be registered in the network slice or the maximum number of PDU sessions that can be generated in the network slice in case that NSAC is applied, and wherein NSAC status analysis for the network slice is based on the NSAC status information.

### [Advantageous Effects of Invention]

According to an embodiment of the disclosure, an apparatus and a method capable of effectively providing services in a wireless communication system can be provided.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates a 5G system structure according to an embodiment of the disclosure.
FIG. 2 illustrates a method for obtaining information related to a network slice by an NWDAF according to an embodiment of the disclosure.
FIG. 3 illustrates a method for obtaining information related to admission control exemption associated with a network slice by an NWDAF according to an embodiment of the disclosure.
FIG. 4 illustrates an example of a functional structure of a base station according to an embodiment of the disclosure.
FIG. 5 illustrates an example of a functional structure of a UE according to an embodiment of the disclosure.
FIG. 6 illustrates an example of a functional structure of a core network entity according to an embodiment of the disclosure.

### [Mode for the Invention]

Hereinafter, the operation principle of the disclosure will be described in detail in conjunction with the accompanying drawings. The terms which will be described below are terms defined in consideration of the functions in the disclosure. The terms in the disclosure may be different according to users, intentions of the users, or customs, and therefore, the definitions of the terms should be made based on the contents throughout the specification.

In the disclosure, terms referring to network entities or network functions, terms referring to messages, terms referring to identification information, and the like are illustratively used for the sake of descriptive convenience. Therefore, the disclosure is not limited by the terms as described below, and other terms referring to subjects having equivalent technical meanings may also be used.

In the following description, terms and names defined in the 5G system standards will be used for the sake of convenience, but the disclosure is not limited by these terms and names and may be applied in the same way to systems that conform other standards.

Hereinafter, the operation principle of the disclosure will be described in detail with reference to the accompanying drawings.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The present embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description of the disclosure, terms and names defined in the 3rd generation partnership project long term evolution (3GPP LTE) and 3GPP 5G standards will be used for the sake of descriptive convenience. However, the disclosure is not limited by these terms and names, and may be applied in the same way to systems that conform other standards.

Hereinafter, exemplary embodiments of the disclosure will be described in detail with reference to the accompanying drawings. It should be noted that, in the accompanying drawings, the same or like elements are designated by the same or like reference signs as much as possible. Also, it should be noted that the following accompanying drawings of the disclosure are provided to help an understanding of the disclosure and the disclosure is not limited to configurations or arrangements illustrated in the drawings of the disclosure.

The disclosure proposes a method for collecting information related to a UE policy in a mobile communication system and, based on the collected information, providing an analysis service to a network function. Specifically, the disclosure proposes a method for collecting load information and network slice admission control status (or network slice quota) information for network slices configured within a mobile communication system and, based on the collected information, supporting generation, modification, and deletion of a UE policy.

The disclosure may reduce the probability of failures occurring in UE registration and PDU session generation procedures, based on network slice admission control status information and network slice load information when generating a UE policy.

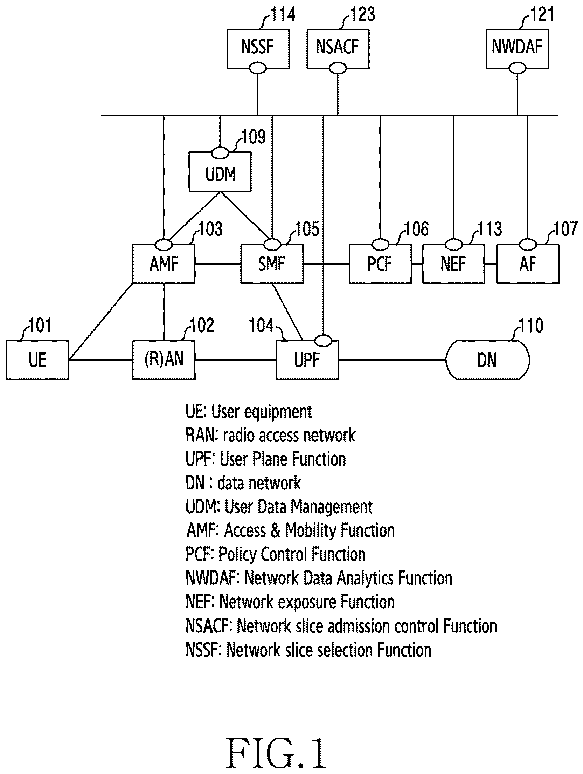

FIG. 1 illustrates a 5G system structure according to an embodiment of the disclosure.

Referring to FIG. 1, a 5G system structure supporting a NWDAF according to an embodiment may include various network functions (NFs). For example, FIG. 1 illustrates some of the network functions, including an access and mobility management function (AMF) 103, a session management function (SMF) 105, and a policy control function (PCF) 106, an application function (AF) 107, a unified data management (UDM) 109, a data network (DN) 110, a user plane function (UPF) 104, a (radio) access network (R)AN) 102, and/or a user equipment (UE) 101.

For example, the 5G system structure may include the AMF 103, the SMF 105, the PCF 106, the AF 107, the UDM 109, the DN 110, the UPF 104, the (R)AN 102, and/or the UE 101.

According to an embodiment, each of the NFs may support the functions described below.

For example, the AMF 103 may provide a function for access and mobility management in units of UE, and one AMF may be connected to one AMF by default. For example, the AMF 103 may support functions, including a signaling between core network (CN) nodes for mobility between 3GPP access networks, termination of a radio access network (RAN) control plane (CP) interface (i.e., an N2 interface), termination of a non-access stratum (NAS) signaling (N1), NAS signaling security (NAS ciphering and integrity protection), AS security control, registration management (registration area management), connection management, idle mode UE reachability (including control and performance of paging retransmission), mobility management control (subscription and policy), support for intra-system mobility and inter-system mobility, support for network slicing, SMF selection, lawful intercept (for AMF events and interfaces to LI system), providing delivery of session management (SM) messages between the UE and SMF, a transparent proxy for SM message routing, access authentication, access authorization including roaming permission check, providing delivery of short message service (SMS) messages between the UE and the short message service function (SMSF), a security anchor function (SAF), and/or security context management (SCM). Some or all of functions of the AMF 103 may be supported within a single instance of one AMF.

For example, the DN 110 may be referred to as a network outside the fifth generation system (5GS) in which, for example, an operator service, Internet access, or a 3rd party services exist. The DN 110 may transmit a downlink protocol data unit (PDU) to the UPF 104 or receive a PDU transmitted from the UE 101 from the UPF 104.

For example, the PCF 106 may receive information on packet flow from an application server and provide a function of determining policies, such as mobility management and session management. For example, the PCF 106 may support a unified policy framework to control network operation. For example, the PCF 106 may provide policy rules so that control plane function(s) (e.g., AMF, SMF, etc.) may enforce the policy rules. For example, the PCF 106 may support a function such as implementing a front end for accessing relevant subscription information for policy determination in a user data repository (UDR).

For example, the SMF 105 may provide a session management function. In case that the UE has a plurality of sessions, each session may be managed by a different SMF. For example, the SMF 105 may support functions, including session management (e.g., session establishment, modification, and termination including tunnel maintenance between the UPF 104 and the (R)AN 102 nodes, UE Internet protocol (IP) address allocation and management (optionally including authentication), selection and control of user plane (UP) functions, traffic steering configuration for routing traffic to appropriate destinations in the UPF 104, termination of interfaces towards policy control functions, enforcement of policies and control portions of quality of service (QoS), lawful intercept (for SM events and interfaces to the LI system), termination of a SM portion of a NAS message, downlink data notification, an initiator of AN specific SM information (transferred to the (R)AN 102 via the N2 through the AMF 103), determination of a session and service continuity (SSC) mode of a session, and a roaming function. Some or all of functions of the SMF 105 may be supported within a single instance of one SMF.

For example, the UDM 109 may store a user's subscription data, policy data, and the like. The UDM 109 may include two portions, i.e., an application front end (FE) (not shown) and a user data repository (UDR) (not shown).

For example, the UPF 104 may deliver a DL PDU received from the DN 110 to the UE 101 via the (R)AN 102 and a UL PDU received from the UE 101 via the (R)AN 102 to the DN 110. For example, the UPF 104 may support functions, including an anchor point for intra/inter radio access technology (RAT) mobility, an external PDU session point of interconnection to a data network (DN), packet routing and forwarding, a user plane part of packet inspection and policy rule enforcement, lawful intercept, a traffic usage report, a UL classifier for supporting traffic flow routing to a DN, a branching point for supporting a multi-homed PDU session, QoS handling for a user plane (e.g., packet filtering, gating, UL/DL rate enforcement), UL traffic verification (service data flow (SDF) mapping between an SDF and a QoS flow), transport level packet marking in UL and DL, DL packet buffering, and DL data notification triggering. Some or all of functions of the UPF 104 may be supported within a single instance of one UPF.

For example, the AF 107 may interwork with the 3GPP CN to provide services. For example, the service providing of the AF 107 may be referred to as supporting functions, including the impact of an application on traffic routing, access to network capability exposure, and interworking with policy frameworks for policy control.

For example, the network data analytic function (NWDAF) 121 may include at least one of an analytics logical function (AnLF) or a model training logical function (MTLF). The NWDAF 121 may collect data within the 5G system and provide analytics services based on the collected data. For example, the NWDAF 121 may train a machine learning model based on data and provide analytics data necessary for network management and operation based on the trained model.

For example, the network exposure function (NEF) 113 may perform the role of relaying services provided by the 3GPP network function inside and outside the 3GPP network. In addition, information or parameters provided by an external application function through the NEF 113 may be configured in the 3GPP internal network function.

For example, the network slice admission control function (NSACF) 123 may perform admission control for registration or PDU session generation for a network slice. The NSACF 123 operates in conjunction with the AMF 103 and/or the SMF 105 to supervise and manage at least one of the maximum number of UE registrations, the maximum number of generated PDU sessions, the number of currently registered UEs, or the number of currently generated PDU sessions. The operation of supervising and managing at least one of the maximum number of UE registrations, the maximum number of generated PDU sessions, the number of currently registered UEs, or the number of currently generated PDU sessions may be performed to perform admission control for the UE registration procedure and PDU session generation.

For example, the network slice selection function (NSSF) 114 provides a service for selecting a network slice instance. The NSSF 114 may perform network slice restriction or network slice instance restriction in conjunction with the NWDAF 121. The NSSF 114 may select a set of network slice instances to serve the UE 101. In addition, the NSSF 114 may determine permitted network slice selection assistance information (NSSAI) and, if necessary, perform mapping to piece of subscribed single-network slice selection assistance information (S-NSSAI). In addition, the NSSF 114 may determine the configured NSSAI and, if necessary, perform mapping to the pieces of subscribed S-NSSAIs. In addition, the NSSF 114 may determine a set of AMFs used to service the UE or depending on the configuration, query the network repository function (NRF) to determine a list of candidate AMFs. The NRF may support a service discovery function. The NRF may receive an NF discovery request from an NF instance and provide information of the discovered NF instance to the NF instance. In addition, the NRF may maintain available NF instances and the services they support.

The (R)AN 102 collectively refers to a new radio access network that supports both evolved UTRA (E-UTRA), which is an evolved version of 4G radio access technology, and a new radio access technology (NR) (e.g., gNB).

The gNB may support functions for radio resource management. For example, the gNB may support functions, including radio bearer control, radio admission control, connection mobility control, dynamic allocation of resources to a UE via UL/DL (i.e., scheduling), Internet protocol (IP) header compression, encryption and integrity protection of a user data stream. For example, the gNB may support functions, including selection of the AMF upon attachment of a UE when routing to the AMF is not determined from information provided to the UE, user plane data routing to the UPF(s), a control plane information routing to the AMF, connection setup and termination, scheduling and transmission (generated from the AMF) of paging messages, scheduling and transmission (generated from the AMF or operating and maintenance (O&M)) of system broadcast information, measurement and measurement reporting configuration for mobility and scheduling, transport level packet marking in UL, session management, support for network slicing, QoS flow management and mapping to data radio bearers, support of UE in inactive mode, a NAS message distribution function, a NAS node selection function, a radio access network sharing, dual connectivity, and tight interworking between NR and E-UTRA.

The UE 101 may be referred to as a user equipment. The user device may be referred to by terms such as a terminal, a mobile equipment (ME), a mobile station (MS), and the like. In addition, the user device may be a portable device, such as a laptop computer, a mobile phone, a personal digital assistant (PDA), a smartphone, or a multimedia device, or may be a non-portable device, such as a personal computer (PC) or a vehicle-mounted device.

Meanwhile, for convenience of explanation, FIG. 1 illustrates a reference model for a case in which the UE 101 accesses one DN 110 by using one PDU session, but the disclosure is not limited thereto.

The UE 101 may simultaneously access two (i.e., local and central) data networks by using multiple PDU sessions. Here, two SMFs may be selected for different PDU sessions. However, each SMF may have a capability to control both local and central UPFs within a PDU session.

In addition, the UE 101 may simultaneously access two (i.e., local and central) data networks provided within a single PDU session.

In the following description, a terminal may imply the UE 101, and the terms UE and the terminal may be used interchangeably. In this case, unless the terminal should be understood as the UE 101, unless specifically defined otherwise.

A network and a core network included in embodiments of the disclosure may be a concept including a network device. A mobility management device (or mobility management function), a location management device (or location management function), a gateway mobile location center, etc. may each be configured as separate devices, and may be configured to be included in a network device.

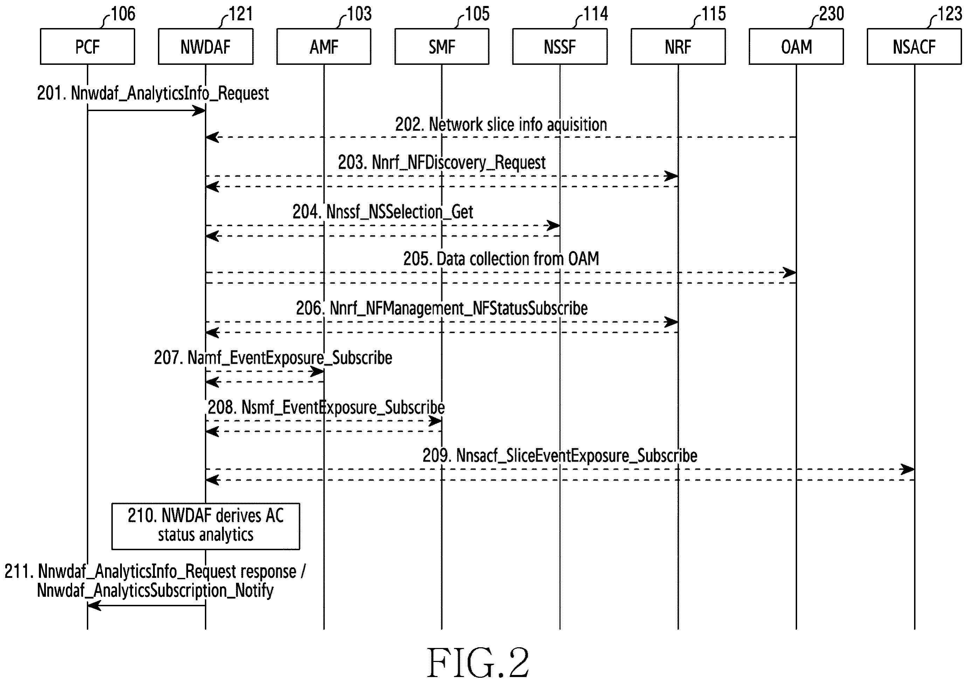

FIG. 2 illustrates a method for obtaining information related to a network slice by an NWDAF according to an embodiment of the disclosure.

Referring to FIG. 2, in operation 201 according to an embodiment, the PCF 106 may call or request the Nnwdaf_AnalyticsInfo service in order to an request analytics service from the NWDAF 121 and transmit at least one of the following information. For example, Analytics ID may include AC status information (or info) and/or load level information (or info). For example, filters may include an S-NSSAI, an area of interest (AoI), network slice instance identifiers (NSI IDs), thresholds for AC, and/or thresholds for load. (Nnwdaf_AnalyticsInfo_Request Analytics ID)
- Analytics ID information: analytics ID corresponding to network slice admission control (NSAC) status info and/or network slice load level info
- Analysis request indicator related to the number of generated PDU sessions and/or analysis request indicator related to the number of registered UEs
- S-NSSAI information or network slice instance ID to designate a specific or designated slice, and/or a combination of DNN and S-NSSAI
- Network slice admission control status threshold information
- Network slice load level threshold information
- Area of interest: For example, tracking area ID (TAI), Cell ID, civic address, geological area information (e.g., local information configured by GPS coordinate values)
- Time of interest: a time zone to be analyzed (e.g., specified by two time stamp values or expressed as an indext referring to a time zone) (or a time zone to be analyzed in a time domain)
- UE information: UE identifier, UE group identifier, subscriber category information, and/or any UE (every UE that may be specified by a combination of DNN or S-NSSAI)

For example, the UE identifier may be referred to as a parameter to identify a UE. The UE group identifier may be referred to as a parameter to identify a group to which the UE belongs or in which the UE is included.

According to an embodiment, a condition in which the PCF 106 requests analytics service for network slice admission control status or network slice load level info from the NWDAF 121 may be as follows. For example, the PCF 106 may request analytics service from the NWDAF 121 under a condition formed by at least one of following conditions or multiple combinations of following conditions below.
- A case in which an update notification regarding UE policy-related information (application data or subscription data) has been received from the UDR
- A case in which a local configuration or a business operator policy configured in the PCF 106 is configured to refer to the NWDAF analytics service when generating/modifying the URSP
- A case in which a UE route selection policy (URSP) is generated /modified among UE policies for the designated DNN and S-NSSAI
- A case in which a network slice selection policy is included when the URSP is generated/modified
- A case in which a URSP for a designated application or service is generated/modified

For example, a designated application or service may be an application identifier, a service identifier, a service description, and/or a service provider identifier. For example, a designated application or service may be checked or identified as an application identifier, a service identifier, a service description, and/or a service provider identifier.

According to an embodiment, the PCF 106 may operate in conjunction with the NRF to find or identify the NWDAF 121 that provides NSAC status analytics before requesting the NSAC status analytics service from the NWDAF 121 (e.g., before performing operation 201). For example, the NWDAF 121 that provides the NSAC status analytics may register an analytics ID value corresponding to the NSAC status analytics service in the NRF. The PCF 106 may configure the analytics ID value as an identifier value (or parameter) corresponding to the NSAC status analytic and provide the same to the NRF. The PCF 106 may obtain NWDAF information from the NRF.

According to an embodiment, in case that an analytics service request received by the NWDAF 121 from the PCF 106 does not include slice information (e.g., S-NSSAI, and/or NSI ID) and the like or the NWDAF 121 fails to specify a slice to be analyzed, the NWDAF 121 may obtain slice information from an operations administration and maintenance (OAM) 230 in operation 202. For example, the slice information may be referred to as information on a slice to be analyzed. (Network slice info acquisition)

According to an embodiment, in operation 203, the NWDAF 121 may provide the slice information (e.g., S-NSSAI or NSI ID) specified through operation 201 or operation 202 to the NRF 115. The NWDAF 121 may obtain or identify information on the AMF and/or SMF included in a specified network slice. The NWDAF 121 may obtain or identify information on the NSSF involved in selection of a specific network slice. The NWDAF 121 may obtain or identify information on the NSACF 123 that performs admission control for a specific network slice. In case that an analytics service request of the PCF 106 is limited to a specific UE (UE ID or UE group ID), the NWDAF 121 may transmit the UE information (UE ID or UE group ID) obtained from the PCF 106 to the UDM. The NWDAF 121 may request, from the UDM, information on the AMF and the SMF that provide a service to a UE corresponding to the acquired UE information or a UE group corresponding to the acquired UE information, and obtain or identify the same. (Nnrf_NFDiscovery_Request)

According to an embodiment, in operation 204, in case that the NWDAF 121 fails to obtain the NSI ID or fails to specify the NSI ID in the operations described above (e.g., operation 201 to operation 203), the NWDAF 121 may request the NSI ID information while providing the S-NSSAI information to the NSSF 114 obtained or identified in the operations described above (e.g., operation 201 to operation 203). (Nnssf_NSSelection_Get)

According to an embodiment, in operation 205, the NWDAF 121 may obtain or identify load information of at least one network function (e.g., AMF, SMF, UPF) that configures a network slice to be analyzed, from the OAM 230, by using (or based on) the S-NSSAI or the NSI ID identified or determined through the operations described above (e.g., operation 201 to operation 204). For example, the NWDAF 121 may collect, obtain, or identify, from the OAM 230, the number of UEs (or average number of UEs) registered in a network slice or network slice instance, the number (average number) of generated PDU sessions, load information or resource usage information, and/or resource configuration information of the NF instance that configures a network slice instance. In an example, a network slice may be referred to as a network slice to be analyzed. (Data collection from OAM)

According to an embodiment, in operation 206, the NWDAF 121 may obtain, from the NRF 115, NF load information (e.g., load information in an NF profile), NF capacity information, and/or NF status information configuring the network slice or the network slice instance specified, determined, or identified through the operations described above (e.g., operation 201 to operation 504). For example, the NF status information configuring the network slice instance may include registered, suspended, and/or undiscoverable information. (Nnrf_NFManagement_NFStatusSubscribe)

According to an embodiment, in operation 207, the NWDAF 121 may request, from the AMF 103, information on whether the network slice admission control (NSAC) is applied to a registration procedure. For example, the NWDAF 121 may provide or transmit the S-NSSAI or the NSI ID information to the AMF 103. The NWDAF 121 may check or identify whether the NSAC is applied to a registration procedure for a network slice (e.g., the number of registered UEs). In addition, the NWDAF 121 may obtain information on the NSACF 123 in charge of the NSAC when the NSAC is being applied to the registration procedure. (Namf_EventExposure_Subscribe)

According to an embodiment, in operation 208, the NWDAF 121 may request, from the SMF 105, information on whether a network slice admission control (NSAC) is applied to PDU session generation. For example, the NWDAF 121 may provide the S-NSSAI or NSI ID information to the SMF 105 and check or identify whether the NSAC is applied to a PDU session generation procedure for a network slice. In addition, the NWDAF 121 may obtain information on the NSACF 123 in charge of the NSAC when the NSAC is being applied to the PDU session generation. (Nsmf_EventExposure_Subscribe)

According to an embodiment, in operation 209, the NWDAF 121 may request network slice admission control status information from the NSACF 123, selected based on the NSACF information (e.g., information on whether the NSAC is applied and/or information on the NSACF performing the NSAC) obtained through the operations described above (e.g., at least one of operation 201 to operation 208). For example, the NWDAF 121 may request, from the NSACF 123, the network slice admission control status information while transmitting an AC status information request indicator of an Analytics ID, an event ID (e.g., an event ID signaling the request of the AC status information), and/or a filter to the NSACF 123. Filters may include the S-NSSAI and/or the NSI ID and/or thresholds for admission control (AC) (threshold) and/or AoI. (Nnsacf_SliceEventExposure_Subscribe) (AC status info request, Filters = S-NSSAI, AoI, thresholds for AC)

For example, the NWDAF 121 may transmit a network slice admission control status information request to a slice to which the NSAC is being applied, by using an NSACF identifier and/or address information obtained through the operations described above. The NWDAF 121 may, when requesting the network slice admission control status information from the NSACF 123, transmit an admission control status information request indicator or event ID, S-NSSAI, NSI ID, and/or an admission control threshold (a ratio or percentage value). For example, based on the admission control status information indicator or the event ID, the NSACF 123 may distinguish whether the admission control status information request is for the number of UE registrations or the number of PDU session generations, and provide the same.

According to an embodiment, the NSACF 123 may provide admission control status information of a slice specified by the S-NSSAI or the NSI ID included in a request of the NWDAF 121. The information provided, delivered, or transmitted from the NSACF 123 to the NWDAF 121 may include the S-NSSAI or NSI ID, the number of UEs currently registered in a slice, a quota based on slice admission control (e.g., the maximum number of UEs that may be registered when admission control is applied), the number of currently generated PDU sessions, and/or a quota based on slice admission control (e.g., the maximum number of PDU sessions that may be generated when admission control is applied).

According to an embodiment, in operation 210, the NWDAF 121 may generate NSAC status analytics (e.g., network slice admission control status analytics) for a network slice (e.g., a slice specified by the S-NSSAI or NSI ID) requested by the PCF 106, based on the network slice admission control status information (e.g., the number of UEs currently registered in a slice, the number of PDU sessions currently generated, the maximum number of UEs that may be registered when the admission control is applied and/or the maximum number of PDU sessions that may be generated when admission control is applied, as quota information based on slice admission control), NF load information, NF status information, and/or NF capability information obtained in the operations described above (e.g., at least one of operation 201 to operation 209). The NWDAF 121 may generate NSAC status analytics statistics and/or an NSAC status analytics prediction. According to an embodiment, NSAC status analytics may be provided as part of network slice load level related network data analytics. (NWDAF derives AC status analytics)

According to an embodiment, the NSAC status analytics statistics information may include at least one of the following information: [S-NSSAI, NSI ID(s), information on whether the NSAC is applied, NSAC quota information (the maximum number of UEs that may be registered or the maximum number of PDU sessions that may be generated when the NSAC is applied), an NSAC quota level (the number of registered UEs or the number of generated PDU sessions compared to an NSAC quota applied to a slice corresponding to the S-NSSAI or NSI ID, or a ratio or percentage value of the number of registered UEs or the number of generated PDU sessions compared to an NSAC quota applied to a slice corresponding to the S-NSSAI or NSI ID), and a crossed NSAC quota level threshold (indicator information indicating whether the admission control threshold value provided by the PCF has been exceeded)].

According to an embodiment, the NSAC status analytics prediction information may include at least one of the following information: [S-NSSAI, NSI ID(s), information on whether the NSAC is applied, NSAC quota information (the maximum number of UEs that may be registered or the maximum number of PDU sessions that may be generated when the NSAC is applied), predicted NSAC quota information (the predicted number of registered UEs to which the NSAC is applied or the predicted number of generated PDU sessions to which the NSAC is applied), NSAC quota level (a predicted value for the number of registered UEs or for the number of generated PDU sessions compared to an NSAC quota applied to a slice corresponding to the S-NSSAI or NSI ID, a predicted value for a ratio or percentage of the number of generated PDU sessions or the number of registered UEs compared to an NSAC quota applied to a slice corresponding to the S-NSSAI or NSI ID), a crossed NSAC quota level threshold (indicator information indicating a prediction as to whether the admission control threshold value provided by the PCF has been exceeded), and/or a confidence level].

According to an embodiment, in operation 211, the NWDAF 121 may provide or transmit the NSAC status analytics statistics and/or an NSAC status analytics statistics prediction value to the PCF 106. The PCF 106 may generate or update the NSSP for a slice, based on (or by using) the NSAC status analytics statistics or the NSAC status analytics prediction value. For example, in case that the number of UEs registered in a specific network slice or the number of generated PDU sessions is approaching the NSAC quota depending on (or based on) the NSAC status analytics and thus admission control is about to be applied, the PCF 106 may generate a new network slice selection policy (NSSP) to derive registration in another slice or PDU session generation, or modify an existing NSSP and provide the modified NSSP to the relevant UEs. For example, the PCF 106 may transmit a URSP including the new or modified NSSP to the UE via the AMF. (Nnwdaf_AnalyticsInfo_Request response/Nnwdaf_AnalyticsSubscription_Notify)

Network entities described in the disclosure may be implemented or performed by at least one server or management server. For example, network entities (e.g., the PCF 106, the NWDAF 121) may be implemented in one server. For example, network entities may be implemented in two or more servers.

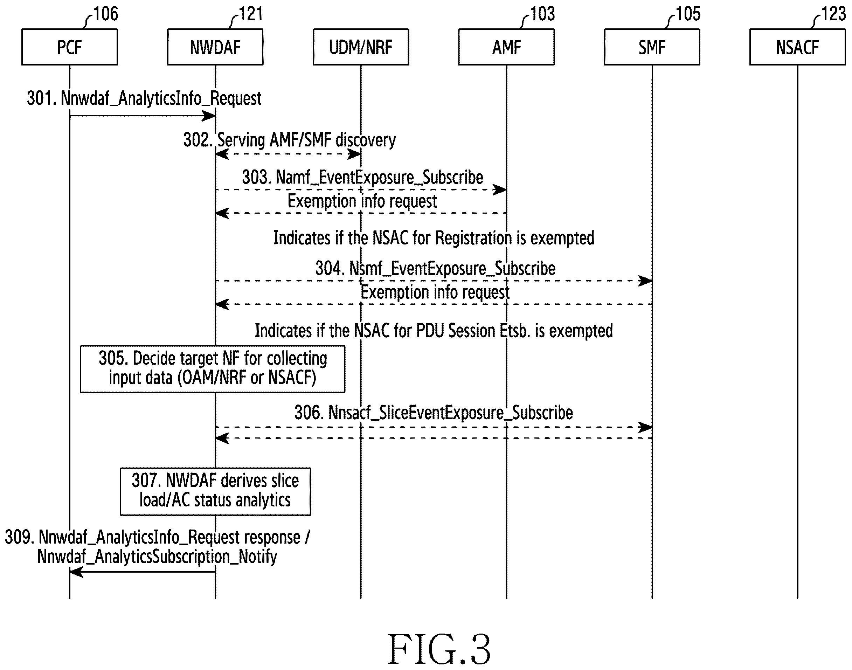

FIG. 3 illustrates a method for obtaining information related to admission control exemption associated with a network slice by an NWDAF according to an embodiment of the disclosure.

Referring to FIG. 3, in operation 301 according to an embodiment, the PCF 106 may call the Nnwdaf_AnalyticsInfo service in order to an request analytics service from the NWDAF 121 and transmit at least one of the following information. For example, Analytics ID may include AC status information (or info) and/or load level information (or info). For example, filters may include an S-NSSAI, an AoI, NSI IDs, thresholds for AC, and/or thresholds for load. (Nnwdaf_AnalyticsInfo_Request)
- Analytics ID information: analytics ID corresponding to network slice admission control (NSAC) status info and/or network slice load level info
- Analysis request indicator related to the number of generated PDU sessions and/or analysis request indicator related to the number of registered UEs
- S-NSSAI information to designate a specific, a network slice instance ID, and/or a combination of DNN and S-NSSAI
- Network slice admission control status threshold information
- Network slice load level threshold information
- Area of interest: For example, tracking area ID (TAI), Cell ID, civic address, geological area information (e.g., local information configured by GPS coordinate values)
- Time of interest: this may be referred to as a time zone to be analyzed. For example, time of interest may be specified by two time stamp values or expressed as an index referring to a time zone)
- UE information: UE identifier, UE group identifier, subscriber category information, or any UE (every UE that may be specified by a combination of DNN or S-NSSAI)
- Service information: an application identifier, service type information (e.g. mission critical service or multimedia priority service, etc.), and a service description filter

According to an embodiment, a condition for requesting the analytics service for network slice admission control status and/or network slice load level info provided by the PCF 106 to the NWDAF 121 may be as follows. The PCF 106 may request analytics service from the NWDAF 121 under a condition formed by at least one of following conditions or multiple combinations of following conditions below. In other words, at least one of the following conditions may trigger the PCF 106 to request the analytics service from the NWDAF 121.
- A case in which an update notification regarding UE policy-related information (application data or subscription data) has been received from the UDR
- A case in which a local configuration or a business operator policy configured in the PCF is configured to refer to the NWDAF analytics service when generating/modifying the URSP
- A case in which a UE route selection policy (URSP) is generated /modified among UE policies for the specific DNN and S-NSSAI
- A case in which a URSP for a specific application or service is generated/modified
- A case in which a network slice selection policy is include when the URSP is generated/modified

According to an embodiment, the PCF 106 may operate in conjunction with or be connected to the NRF 115 to find or identify the NWDAF 121 that provides NSAC status analytics before requesting the NSAC status analytics service from the NWDAF 121 (e.g., before performing operation 301). For example, the NWDAF 121 that provides the NSAC status analytics may register an analytics ID value corresponding to the NSAC status analytics service in the NRF 115. The PCF 106 may configure or identify the analytics ID value as an identifier value corresponding to the NSAC status analytic and provide the same to the NRF 115. The PCF 106 may obtain or identify information on the NWDAF 121 from the NRF 115.

According to an embodiment, in operation 302, the NWDAF 121 obtains information on the SMF 105 configuring the network slice and/or information on the AMF 103 (e.g., identifier and address information) through the UDM 109 and/or the NRF 115. A network slice may be specified or identified by the S-NSSAI and/or NSI ID received from the PCF 106. (Serving AMF/SMF discovery)

For example, in case that the PCF 106 requests the NSAC status analytics from a specific UE or UE group, the NWDAF 121 may provide service to the specific UE. The NWDAF 121 may obtain or identify at least one of information on the AMF or information on the SMF, specified by the S-NSSAI and/or NSI ID, from the UDM 109. Alternatively, in case that information on a specific UE is not provided from the PCF 106, the NWDAF 121 may obtain or identify information on the AMF and/or information on the SMF corresponding to a network slice specified by the S-NSSAI and NSI ID from the NRF 115.

According to an embodiment, in operation 303, the NWDAF 121 may provide the S-NSSAI, the NSI ID, the UE information, and/or the service information to the AMF 103, by using (or based on) the information on the AMF obtained in the operations described above (e.g., at least one of operations 301 to 303). The NWDAF121 may request information on whether the NSAC is applied to the S-NSSAI and the NSI ID (e.g., information on whether the NSAC is applied to a UE registration procedure), and/or whether the NSAC exemption is applied to a specific UE or service when the NSAC is applied (e.g., whether the NSAC exemption is applied to a UE registration procedure). The AMF 103 may provide the information requested by the NWDAF 121. For example, the AMF 106 may provide the NWDAF with information on whether the NSAC is applied to the S-NSSAI or NSI ID and/or whether the NSAC exemption is applied thereto. In addition, the AMF 106 may provide, deliver, or transmit information on whether the NSAC is applied to a specific UE or a specific service and/or whether the NSAC exemption is applied thereto. (Namf_EventExposure Subscribe) (Exemption info request) (Indicates if the NSAC for Registration is exempted) According to an embodiment, in operation 304, the NWDAF 121 may provide the S-NSSAI, the NSI ID, the UE information and/or the service information to the SMF 105, by using (or based on) the information on the SMF 105 obtained in operation 302 described above. The NWDAF 121 may request information on whether the NSAC is applied to the S-NSSAI and NSI ID (e.g., information on whether the NSAC is applied to PDU session generation), and/or whether the NSAC exemption is applied to a specific UE or specific service when the NSAC is applied (e.g., whether the NSAC exemption is applied to PDU session generation). The SMF 105 may provide or deliver the information requested by the NWDAF 121. For example, the SMF 105 may provide or deliver information on whether the NSAC is applied to the S-NSSAI or NSI ID and whether the NSAC exemption is applied to the NWDAF. In addition, the AMF 103 may provide or transmit information on whether the NSAC is applied to a specific UE or service and whether the NSAC exemption is applied thereto. (Nsmf_EventExposure Subscribe) (Exemption info request) (Indicates if the NSAC for PDU session Estb. is exempted)

According to an embodiment, in operation 305, the NWDAF 121 may perform some or all of the operations in operations 202 to 209 of FIG. 2. For example, depending on (or based on) whether the NSAC exemption is applied, the NWDAF 121 may perform input data collection as follows. (Decide target NF for collecting input data (OAM/NRF or NSACF)

For example, in case that the NSAC exemption is applied, the NWDAF 121 may collect, identify, or obtain only network slice load and NF load-related information from the NRF 115, the AMF 103, the SMF 105, and/or the OAM without collecting the NSAC status information.

For example, in case that the NSAC exemption is not applied, the NWDAF 121 may collect, identify, or obtain the network slice admission control status information, network slice load, and/or NF load-related information from the NRF 115, the AMF 103, SMF 105, and/or OAM. (Nnsacf_SliceEventExposure _Subscribe)

According to an embodiment, in operation 307, as shown in operation 210 of FIG. 2, the NWDAF 121 may generate NSAC status analytics (e.g., network slice admission control status analytics) for a network slice (e.g., a slice specified by the S-NSSAI or the NSI ID) requested by the PCF 106, based on the network slice admission control status information, NF load information, and/or NF capability information obtained in the operations described above. For example, in case that the NSAC exemption is applied, the NWDAF 121 may generate or identify only network slice load analytics. For example, in case that the NSAC exemption is not applied, the NWDAF 121 may generate or identify NSAC status analytics. For example, in case that the NSAC exemption is not applied, the NWDAF 121 may generate or identify both the NSAC status analytics and the network slice load analytics. For example, the NWDAF 121 may transmit Analytics ID, event ID, and/or filters to the NSACF 123 and request the network slice admission control status information. For example, the Analytics ID may include AC status information. For example, filters may include S-NSSAI and/or thresholds for AC. For example, the event ID may include an event ID indicating a request for AC status information. (NWDAF derives slice load/AC status analytics)

According to an embodiment, the NSAC status analytics may be provided as part of network slice load level related network data analytics.

According to an embodiment, in operation 309, as shown in operation 211 of FIG. 2, the NWDAF 121 may provide the NSAC status analytics and/or the network slice load analytics to the PCF 106. The PCF 106 may perform URSP generation or modification, based on the provided analytics information, and transmit the generated or modified URSP to the UE via the AMF. (Nnwdaf_AnalyticsInfo_Request response/Nnwdaf_AnalyticsSubscription_Notify)

According to an embodiment, in the embodiment described in FIG. 2 and the embodiment described in FIG. 3 of the disclosure, the PCF 106 may select one of the NSAC status analytics and the network slice load analytics to be requested from the NWDAF 121 by performing the following example operations.

(1) The PCF 106 may request information on whether the NSAC is applied, from the AMF 103 or SMF 105 that configures a specific slice (e.g., a slice specified by the S-NSSAI or NSI ID), or may request information on whether the NSAC is applied, from the NSACF that performs the NSAC for the specific slice, thereby obtaining or identifying the requested information.

(2) In case that the NSAC is not applied to a specific slice, the PCF 106 may request the network slice load analytics service from the NWDAF instead of requesting the NSAC status analytics service. In case that the NSAC has been applied to a specific slice but the NSAC exemption has been applied to a target UE or target service, the PCF 106 may request the network slice load analytics service from the NWDAF 121 instead of requesting the NSAC status analytics service. The PCF 106 may request the NSAC status analytics service from the NWDAF in case that the NSAC has been applied to a specific slice. For example, the PCF 106 may request the network slice load analytics service along with the NSAC status analytics according to an internal configuration of the PCF.

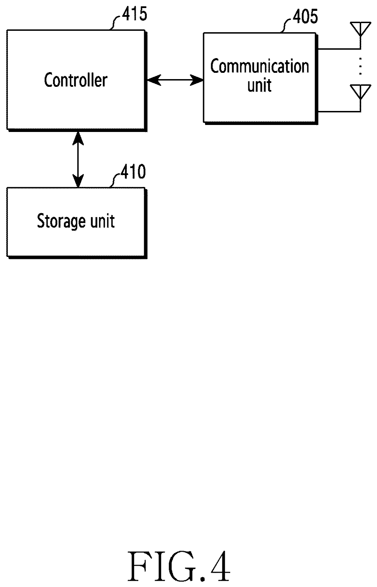

FIG. 4 illustrates a functional structure of a base station according to an embodiment of the disclosure.

Referring to FIG. 4, the structure according to an embodiment illustrated in FIG. 4 may be understood as a structure of the RAN 102 in FIG. 1. As used herein, the term "... unit", "... er", or the like refers to a unit configured to process at least one function or operation, and may be implemented as hardware, software, or a combination of hardware and software.

According to an embodiment, the base station may include a communication unit 405, a storage unit 410, and/or a controller 415.

The communication unit 405 performs functions for transmitting/receiving signals through a radio channel. For example, the communication unit 405 performs functions of conversion between baseband signals and bitstrings according to the physical layer specifications of the system. For example, during data transmission, the communication unit 405 generates complex symbols by encoding and modulating a transmission bitstream. In addition, during data reception, the communication unit 405 demodulates and decodes a baseband signal to restore a received bitstring. In addition, the communication unit 405 up-converts a baseband signal to an RF band signal, transmits the same through an antenna, and down-converts an RF band signal received through the antenna to a baseband signal. For example, the communication unit 405 may include a transmission filter, a reception filter, an amplifier, a mixer, an oscillator, a DAC, and an ADC.

In addition, the communication unit 405 may include multiple transmission/reception paths. Moreover, the communication unit 405 may include at least one antenna array including multiple antenna elements. In terms of hardware, the communication unit 405 may include a digital circuit and an analog circuit (e.g., a radio frequency integrated circuit (RFIC)). The digital circuit and the analog circuit may be implemented as a single package. In addition, the communication unit 405 may include multiple RF chains. Furthermore, the communication unit 405 may perform beamforming.

The communication unit 405 transmits and receives signals as described above. Accordingly, all or part of the communication unit 405 may be referred to as a "transmitter", a "receiver", or a "transceiver". In addition, as used in the following description, the meaning of "transmission and reception performed through a radio channel" includes the meaning that the above-described processing is performed by the communication unit 405.

The storage unit 410 stores data such as basic programs, application programs, and configuration information for operations of the base station. The storage unit 410 may include a volatile memory, a nonvolatile memory, or a combination of a volatile memory and a nonvolatile memory. In addition, the storage unit 410 provides the stored data at the request of the controller 415.

The controller 415 controls the overall operation of the base station. For example, the controller 415 transmits/receives signals through the communication unit 405. In addition, the controller 415 records data in the storage unit 410 and reads the data from the storage unit 410. In addition, the controller 415 may perform functions of protocol stacks required by communication specifications. To this end, the controller 415 may include at least one processor or microprocessor, or may be a part of a processor. In addition, a part of the communication unit 405 and the controller 415 may be referred to as a communication processor (CP). According to various embodiments, the controller 415 may control to perform synchronization by using a wireless communication network. For example, the controller 415 may control the base station to perform operations according to various embodiments described above.

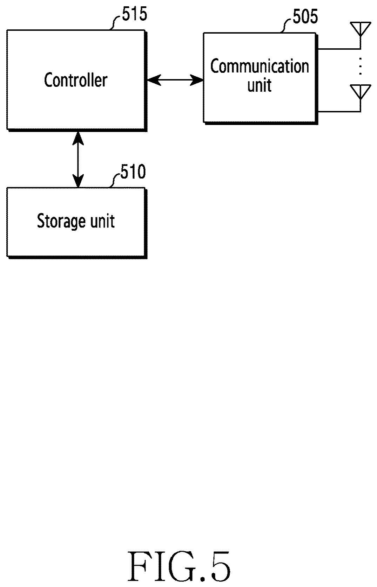

FIG. 5 illustrates an example of a functional structure of a UE according to an embodiment of the disclosure. The structure illustrated in FIG. 5 may be understood as a structure of the UE 201 in FIG.2 or the UE 101 in FIG 1. As used herein, the term "... unit", "... er", or the like refers to a unit configured to process at least one function or operation, and may be implemented as hardware, software, or a combination of hardware and software.

Referring to FIG. 5, the UE includes a communication unit 505, a storage unit 510, and a controller 515.

The communication unit 505 performs functions for transmitting/receiving signals through a radio channel. For example, the communication unit 505 performs functions of conversion between baseband signals and bitstrings according to the physical layer specifications of the system. For example, during data transmission, the communication unit 505 generates complex symbols by encoding and modulating a transmission bitstream. In addition, during data reception, the communication unit 505 demodulates and decodes a baseband signal to restore a received bitstring. In addition, the communication unit 505 up-converts a baseband signal to an RF band signal, transmits the same through an antenna, and down-converts an RF band signal received through the antenna to a baseband signal. For example, the communication unit 505 may include a transmission filter, a reception filter, an amplifier, a mixer, an oscillator, a DAC, and an ADC.

In addition, the communication unit 505 may include multiple transmission/reception paths. Moreover, the communication unit 505 may include at least one antenna array including multiple antenna elements. In terms of hardware, the communication unit 505 may include a digital circuit and an analog circuit (e.g., a radio frequency integrated circuit (RFIC)). The digital circuit and the analog circuit may be implemented as a single package. In addition, the communication unit 505 may include multiple RF chains. Furthermore, the communication unit 505 may perform beamforming.

The communication unit 505 transmits and receives signals as described above. Accordingly, all or part of the communication unit 505 may be referred to as a "transmitter", a "receiver", or a "transceiver". In addition, as used in the following description, the meaning of "transmission and reception performed through a radio channel" includes the meaning that the above-described processing is performed by the communication unit 505.

The storage unit 510 stores data such as basic programs, application programs, and configuration information for operations of the UE. The storage unit 510 may include a volatile memory, a nonvolatile memory, or a combination of a volatile memory and a nonvolatile memory. In addition, the storage unit 510 provides the stored data at the request of the controller 515.

The controller 515 controls the overall operation of the UE. For example, the controller 515 transmits/receives signals through the communication unit 505. In addition, the controller 515 records data in the storage unit 510 and reads the data from the storage unit 510. In addition, the controller 515 may perform functions of protocol stacks required by communication specifications. To this end, the controller 510 may include at least one processor or microprocessor, or may be a part of a processor. In addition, a part of the communication unit 505 and the controller 515 may be referred to as a communication processor (CP). According to various embodiments, the controller 515 may control to perform synchronization by using a wireless communication network. For example, the controller 515 may control the UE to perform operations according to various embodiments described below.

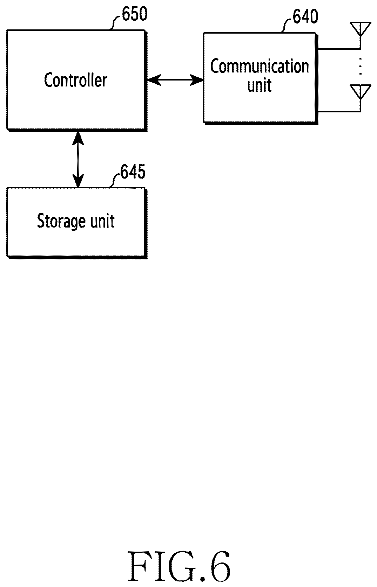

FIG. 6 illustrates an example of a functional structure of a core network entity according to an embodiment of the disclosure. A structure of a core network entity in a wireless communication system according to various embodiments of the disclosure is illustrated. The structure illustrated in FIG. 6 may be understood as a structure of a device having at least one function among network entities (e.g., NWDAF 121) in FIG. 1. As used herein, the term "... unit", "... er", or the like refers to a unit configured to process at least one function or operation, and may be implemented as hardware, software, or a combination of hardware and software.

Referring to FIG. 6, the core network entity may include a communication unit 640, a storage unit 645, and a controller 650.

The communication unit 640 provides an interface for communicating with other devices in the network. That is, the communication unit 640 converts a bitstring, transmitted from the core network entity to any other device, into a physical signal, and converts a physical signal, received from any other device, into a bitstring. The communication unit 640 may transmit/receive signals. Accordingly, the communication unit 640 may be referred to as a modem, a transmitter, a receiver, or a transceiver. The communication unit 640 enables the core network entity to communicate with other devices or the system via a backhaul connection (e.g., wired backhaul or wireless backhaul) or via a network.

The storage unit 645 stores data such as basic programs, application programs, and configuration information for operations of the core network entity. The storage unit 645 may include a volatile memory, a nonvolatile memory, or a combination of a volatile memory and a nonvolatile memory. In addition, the storage unit 645 provides the stored data at the request of the controller 650.

The controller 650 controls the overall operation of the core network entity. For example, the controller 650 transmits/receives signals through the communication unit 640. In addition, the controller 650 records data in the storage unit 645 and reads the data from the storage unit 645. To this end, the controller 650 may include at least one processor. According to various embodiments, the controller 650 may control to perform synchronization by using a wireless communication network. For example, the controller 650 may control the core network entity to perform operations according to various embodiments described below.

According to an embodiment, a method performed by an NWDAF in a mobile communication system may include, in response to identifying an analysis request for a network slice, obtaining information related to the network slice, obtaining information associated with at least one network entity included in the network slice, based on the information related to the network slice, and generating an analysis result for the network slice, based on the obtained information associated with the at least one network.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

The technical subjects pursued in the present disclosure may not be limited to the above-mentioned technical subjects, and other technical subjects which are not mentioned herein may be clearly understood from the following descriptions by those skilled in the art to which the present disclosure pertains.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. Moreover, other variants based on the technical idea of the embodiments may also be implemented in various systems such as FDD LTE, TDD LTE, and 5G or NR systems.

A method performed by a network data analytic function (NWDAF) entity in a wireless communication system may include receiving, from a policy control function (PCF) entity, an analysis request for a network slice, receiving, from an operations administration and maintenance (OAM) entity or a network slice selection function (NSSF) entity, based on the identification information, first information including at least one of the number of terminals registered in the network slice or the number of protocol data unit (PDU) sessions generated in the network slice, receiving NSAC status information, from a network slice admission control function (NSACF) entity, based on the identification information, and performing NSAC status analysis for the network slice, based on the first information and the second information. The analysis request may include identification information of the network slice. The NSAC status information may include second information on at least one of the maximum number of terminals that can be registered in the network slice or the maximum number of PDU sessions that can be generated in the network slice, in case that NSAC is applied.

According to an embodiment, in case that the first information includes the number of registered terminals, the method may further include transmitting the identification information to an access and mobility management function (AMF) entity, and in case that the NSAC is applied to a registration procedure of the network slice, receiving the NSACF status information from the AMF entity, based on the identification information, and in case that the first information includes the number of generated PDU sessions, the method may further include transmitting the identification information to a session management function (SMF) entity, and in case that the NSAC is applied to a PDU session generation procedure of the network slice, receiving the NSACF status information from the SMF entity, based on the identification information.

According to an embodiment, the method may further include transmitting, to the NSACF entity, a request for the NSAC status information, and receiving, based on the indicator, the second information including the maximum number of terminals or the maximum number of PDU sessions from the NSACF entity. The request for the NSAC status information may include an indicator indicating whether the request is for the maximum number of terminals or the maximum number of PDU sessions.

According to an embodiment, the method may further include transmitting the NSAC status analysis to the PCF entity, wherein a network slice selection policy (NSSP) for the network slice may be based on the NSAC status analysis.

A network data analytic function (NWDAF) entity in a wireless communication system may include a transceiver, and a controller coupled with the transceiver, wherein the controller is configured to receive, from a policy control function (PCF) entity, an analysis request for a network slice, receive, from an operations administration and maintenance (OAM) entity or a network slice selection function (NSSF) entity, based on the identification information, first information including at least one of the number of terminals registered in the network slice or the number of protocol data unit (PDU) sessions generated in the network slice, receive NSAC status information from a network slice admission control function (NSACF) entity, based on the identification information, and perform NSAC status analysis for the network slice, based on the first information and the second information. The analysis request may include identification information of the network slice. The NSAC status information may include second information on at least one of the maximum number of terminals that can be registered in the network slice or the maximum number of PDU sessions that can be generated in the network slice, in case that NSAC is applied.

According to an embodiment, in case that the first information includes the number of registered terminals, the controller may be configured to transmit the identification information to an access and mobility management function (AMF) entity, and in case that the NSAC is applied to a registration procedure of the network slice, receive the NSACF status information from the AMF entity, based on the identification information. In case that the first information includes the number of generated PDU sessions, the controller may be configured to transmit the identification information to a session management function (SMF) entity, and in case that the NSAC is applied to a PDU session generation procedure of the network slice, receive the NSACF status information from the SMF entity, based on the identification information.

According to an embodiment, the controller may be configured to transmit, to the NSACF entity, a request for the NSAC status information, the request for the NSAC status information including an indicator indicating whether the request is for the maximum number of terminals or the maximum number of PDU sessions, and receive, based on the indicator, the second information including the maximum number of terminals or the maximum number of PDU sessions from the NSACF entity.

According to an embodiment, the controller may be configured to transmit the NSAC status analysis to the PCF entity, and a network slice selection policy (NSSP) for the network slice may be based on the NSAC status analysis.

A method performed by a network slice admission control function (NSACF) entity in a wireless communication system may include receiving, from a network data analytic function (NWDAF) entity, a request for network slice admission control (NSAC) status information, and transmitting the NSAC status information to the NWDAF entity, based on the identification information, wherein the request includes identification information of a network slice, the NSAC status information includes at least one of the maximum number of terminals that can be registered in the network slice or the maximum number of PDU sessions that can be generated in the network slice in case that NSAC is applied, and the NSAC status analysis for the network slice is based on the NSAC status information.

According to an embodiment, NSAC status analysis may include information on a ratio of the maximum number of terminals to the number of terminals registered in the network slice, or on a ratio of the maximum number of PDU sessions to the number of PDU sessions generated in the network slice.

According to an embodiment, the request for the NSAC status information includes an indicator indicating whether the request is for the maximum number of terminals or the maximum number of PDU sessions, and the method may further include transmitting, based on the indicator, the NSAC status information including the maximum number of terminals or the maximum number of PDU sessions to the NWDAF entity.

According to an embodiment, the identification information includes at least one of a network slice selection assistance information (NSSAI) or a network slice instance identifier (NSI ID).

A network slice admission control function (NSACF) entity in a wireless communication system may include a transceiver, and a controller coupled with the transceiver, wherein the controller is configured to receive, from a network data analytic function (NWDAF) entity, a request for network slice admission control (NSAC) status information, and transmit the NSAC status information to the NWDAF entity, based on the identification information. The request may include identification information of a network slice, the NSAC status information includes at least one of the maximum number of terminals that can be registered in the network slice or the maximum number of PDU sessions that can be generated in the network slice in case that NSAC is applied, and the NSAC status analysis for the network slice is based on the NSAC status information.

According to an embodiment, the NSAC status analysis may include information on a ratio of the maximum number of terminals to the number of terminals registered in the network slice, or on a ratio of the maximum number of PDU sessions to the number of PDU sessions generated in the network slice.

According to an embodiment, the request for the NSAC status information includes an indicator indicating whether the request is for the maximum number of terminals or the maximum number of PDU sessions, and the controller may be configured to transmit, based on the indicator, the NSAC status information including the maximum number of terminals or the maximum number of PDU sessions to the NWDAF entity.

## Claims

1. A method performed by a network data analytic function (NWDAF) entity in a wireless communication system, the method comprising:
receiving, from a policy control function (PCF) entity, an analysis request for a network slice, wherein the analysis request includes identification information of the network slice;
receiving, from an operations administration and maintenance (OAM) entity or a network slice selection function (NSSF) entity, first information including at least one of the number of terminals registered in the network slice or the number of protocol data unit (PDU) sessions generated in the network slice, based on the identification information;
receiving, from a network slice admission control function (NSACF) entity, network slice admission control (NSAC) status information based on the identification information, wherein the NSAC status information includes second information on at least one of a maximum number of terminals that can be registered in the network slice or a maximum number of PDU sessions that can be generated in the network slice in case that NSAC is applied; and
performing NSAC status analysis for the network slice, based on the first information and the second information.

2. The method of claim 1, further comprising:
in case that a number of the registered terminals is comprised in the first information:
transmitting, to an access and mobility management function (AMF) entity, the identification information; and
in case that the NSAC is applied to a registration procedure of the network slice, receiving, from the AMF entity, the NSACF status information, based on the identification information, and
in case that a number of the generated PDU sessions is comprised in the first information:
transmitting, to a session management function (SMF) entity, the identification information; and
in case that the NSAC is applied to a PDU session generation procedure of the network slice, receiving, from the SMF entity, the NSACF status information, based on the identification information.

3. The method of claim 1, further comprising:
transmitting, to the NSACF entity, a request for the NSAC status information, wherein the request for the NSAC status information includes an indicator indicating whether the request is for the maximum number of the terminals or the maximum number of the PDU sessions; and
receiving, from the NSACF entity, the second information including the maximum number of the terminals or the maximum number of the PDU sessions based on the indicator.

4. The method of claim 1, further comprising:
transmitting, to the PCF entity, the NSAC status analysis,
wherein a network slice selection policy (NSSP) for the network slice is based on the NSAC status analysis.

5. A network data analytic function (NWDAF) entity in a wireless communication system, the NWDAF entity comprising:
a transceiver; and
a controller coupled with the transceiver,
wherein the controller is configured to:
receive, from a policy control function (PCF) entity, an analysis request for a network slice, wherein the analysis request includes identification information of the network slice;
receive, from an operations administration and maintenance (OAM) entity or a network slice selection function (NSSF) entity, first information including at least one of the number of terminals registered in the network slice or the number of protocol data unit (PDU) sessions generated in the network slice, based on the identification information;
receive, from a network slice admission control function (NSACF) entity, NSAC status information based on the identification information, wherein the NSAC status information includes second information on at least one of a maximum number of terminals that can be registered in the network slice or a maximum number of PDU sessions that can be generated in the network slice in case that NSAC is applied; and
perform NSAC status analysis for the network slice, based on the first information and the second information.

6. The NWDAF entity of claim 5, wherein the controller is configured to:
in case that a number of the registered terminals is comprised in the first information:
transmit, to an access and mobility management function (AMF) entity, the identification information; and
in case that the NSAC is applied to a registration procedure of the network slice, receive, from the AMF entity, the NSACF status information, based on the identification information, and
in case that a number of the generated PDU sessions is comprised in the first information:
transmit, to a session management function (SMF) entity, the identification information; and
in case that the NSAC is applied to a PDU session generation procedure of the network slice, receive, from the SMF entity, the NSACF status information, based on the identification information.

7. The NWDAF entity of claim 5, wherein the controller is configured to:
transmit, to the NSACF entity, a request for the NSAC status information, wherein the request for the NSAC status information includes an indicator indicating whether the request is for the maximum number of the terminals or the maximum number of the PDU sessions; and
receive, from the NSACF entity, the second information including the maximum number of the terminals or the maximum number of the PDU sessions based on the indicator.

8. The NWDAF entity of claim 5, wherein the controller is configured to:
transmit, to the PCF entity, the NSAC status analysis, and
wherein a network slice selection policy (NSSP) for the network slice is based on the NSAC status analysis.

9. A method performed by a network slice admission control function (NSACF) entity in a wireless communication system, the method comprising:
receiving, from a network data analytic function (NWDAF) entity, a request for network slice admission control (NSAC) status information, wherein the request includes identification information of a network slice; and
transmitting, to the NWDAF entity, the NSAC status information, based on the identification information,
wherein the NSAC status information comprises at least one of a maximum number of terminals that can be registered in the network slice or a maximum number of PDU sessions that can be generated in the network slice in case that NSAC is applied, and
wherein NSAC status analysis for the network slice is based on the NSAC status information.

10. The method of claim 9, wherein the NSAC status analysis comprises information on a ratio of a number of terminals registered in the network slice to the maximum number of the terminals, or a ratio of a number of PDU sessions generated in the network slice to the maximum number of the PDU sessions.

11. The method of claim 9, wherein the request for the NSAC status information comprises an indicator indicating whether the request is for the maximum number of the terminals or the maximum number of the PDU sessions, and
wherein the method further comprises:
transmitting, to the NWDAF entity, the NSAC status information including the maximum number of the terminals or the maximum number of the PDU sessions based on the indicator.

12. The method of claim 9, wherein the identification information comprises at least one of a network slice selection assistance information (NSSAI) or a network slice instance identifier (NSI ID).

13. A network slice admission control function (NSACF) entity in a wireless communication system, the NSACF entity comprising:
a transceiver; and
a controller coupled with the transceiver,
wherein the controller is configured to:
receive, from a network data analytic function (NWDAF) entity, a request for network slice admission control (NSAC) status information, wherein the request includes identification information of a network slice; and
transmit, to the NWDAF entity, the NSAC status information, based on the identification information,
wherein the NSAC status information comprises at least one of a maximum number of terminals that can be registered in the network slice or a maximum number of PDU sessions that can be generated in the network slice in case that NSAC is applied, and
wherein NSAC status analysis for the network slice is based on the NSAC status information.

14. The NSACF entity of claim 13, wherein the NSAC status analysis comprises information on a ratio of a number of terminals registered in the network slice to the maximum number of the terminals, or a ratio of a number of PDU sessions generated in the network slice to the maximum number of the PDU sessions.

15. The NSACF entity of claim 13, wherein the request for the NSAC status information comprises an indicator indicating whether the request is for the maximum number of the terminals or the maximum number of the PDU sessions, and
wherein the controller is configured to:
transmit, to the NWDAF entity, the NSAC status information including the maximum number of the terminals or the maximum number of the PDU sessions based on the indicator.
